# EUROPÄISCHE PATENTSCHRIFT

(11) **EP 0 964 797 B1**
(45) Veröffentlichungstag und Bekanntmachung des Hinweises auf die Patenterteilung: **12.06.2002**
(21) Anmeldenummer: 98913602.3
(22) Anmeldetag: 27.02.1998
(51) Int. Cl.: B60K 17/28

(54) **STEUERUNG VON NEBENABTRIEBEN IN AUTOMATISIERTEN FAHRZEUGGETRIEBEN**
AUTOMATIC MOTOR VEHICLE AUXILIARY DRIVE CONTROL
COMMANDE DES SORTIES AUXILIAIRES DANS DES BOITES DE VITESSES AUTOMATIQUES DE VEHICULES

(30) Priorität: 05.03.1997 DE 19708929
(43) Veröffentlichungstag der Anmeldung: 22.12.1999
(73) Patentinhaber: ZF FRIEDRICHSHAFEN Aktiengesellschaft, 88038 Friedrichshafen (DE)
(72) Erfinder: SAUERMANN, Gerd, D-88677 Markdorf (DE); HENSINGER, Klaus, D-88046 Friedrichshafen (DE)
(86) Internationale Anmeldenummer: EP9801110
(87) Internationale Veröffentlichungsnummer: WO9839172

(56) Entgegenhaltungen:
- EP-A- 0 569 726
- EP-A- 0 677 415
- DE-A- 4 336 340
- US-A- 4 760 902
- US-A- 5 593 363

## Beschreibung

Die Erfindung betrifft eine Steuerung von Nebenabtrieben in Getrieben, die über eine automatisierte oder teilautomatisierte Schalteinrichtung verfügen.

In modernen Nutzfahrzeugen werden Schalteinrichtung zum teilautomatischen Schalten von mehrstufigen, insbesondere vielstufigen Zahnradwechselgetrieben von Kraftfahrzeugen mit einer zwischen dem Antriebsmotor und dem Getriebe angeordneten Kupplung und einem elektronischen Steuergerät zur Ermittlung von zulässigen Schaltempfehlungen angeboten.

Zur Erleichterung für den Fahrer und zur Verbesserung der Wirtschaftlichkeit beim Fahren mit Nutzfahrzeugen, insbesondere bei solchen, die mit Vielganggetrieben ausgerüstet sind, wurden viele teilautomatische Schalteinrichtungen vorgeschlagen und auch entwickelt, mit denen unterschiedlichste Aufgaben und Strategien verfolgt wurden.

Derartige vielstufige Getriebe weisen in der Regel eine Vielzahl von Nebenabtriebsmöglichkeiten auf. Diese Nebenabtriebe sind nicht synchronisiert, sondern klauengeschaltet. Zum Einschalten des Nebenabtriebs darf keine hohe Differenzdrehzahl an der Klaue vorliegen, da es ansonsten zu einem unerwünschten Ratschgeräusch kommt. Andererseits ist bei einer Differenzdrehzahl nahe Null die Wahrscheinlichkeit sehr hoch, daß es zu einer Zahn-auf-Zahn-Stellung der Klauen kommt und der Nebenabtrieb nicht einspuren kann.

Aus der EP 0 677 415 A2 ist eine Steuerung für einen Nebenabtrieb eines Getriebes bekannt, bei dem vom Fahrer ein Signal über einen Schalter abgegeben wird. Der Schalter kontrolliert das Einschalten des Antriebsmotors und einer Nebenabtriebskupplung. Der Antriebsmotor kann nur gestartet werden, wenn der Schalter ausgeschaltet ist und die Nebenabtriebskupplung kann nur geschlossen werden, wenn der Schalter eingeschaltet ist. Hierdurch wird eine Verbesserung des Einspurens einer Schalteinrichtung des Nebenabtriebes nicht erreicht.

Der Erfindung liegt die Aufgabe zugrunde, ein automatisiertes oder teilautomatisiertes Getriebe mit einer automatisierten Kupplung derart weiterzuentwickeln, daß ein sicheres Einspuren der Klauen erzielt wird.

Die Aufgabe wird gelöst durch ein Verfahren mit den Merkmalen nach Anspruch 1. Ausgestaltungen sind Gegenstand von Unteransprüchen.

Um bei einem automatisierten Getriebe eines Nutzfahrzeuges die Zuschaltung eines Nebenabtriebes zu ermöglichen, wird erfindungsgemäß vorgeschlagen, daß der Fahrer seinen Wunsch zum Einschalten des Nebenabtriebes in Form eines Signals beispielsweise über einen Schalter oder Taster abgibt. Dieses Signal wird in einer Steuereinrichtung in ein Signal zur Öffnung einer automatisierten Trennkupplung zwischen dem Antriebsmotor und dem Getriebe des Nutzfahrzeuges umgeformt. Die Drehzahl der Eingangswelle wird mit Hilfe von Sensoren überwacht. Nach Erreichen einer vorgegebenen Minimaldrehzahl der Eingangswelle des Getriebes wird eine Schalteinrichtung zur Verbindung des Nebenabtriebes mit einer Getriebewelle angesteuert, um eine Schließung dieser Schalteinrichtung zu erzielen. Dieses ist diejenige Getriebewelle in dem Getriebe, die zum Antreiben des Nebenabtriebes vorgesehen ist. Je nach Art des Getriebes können dies verschiedene Getriebewellen sein. Vorzugsweise handelt es sich dabei um eine Vorgelegewelle, die parallel zu einer koaxial zur Eingangswelle des Getriebes angeordneten Hauptwelle vorgesehen ist. Bei einem Getriebe mit zwei parallel angeordneten Vorgelegewellen zur Lastverteilung auf diese beiden Vorgelegewellen wird vorzugsweise an eine der beiden Vorgelegewellen der Nebenabtrieb angeschlossen.
Die Kupplung wird anschließend wieder geschlossen. Hierdurch wird wieder ein Verdrehmoment auf die antreibende Getriebewelle gebracht, wodurch sich die Verzahnung der gegenüberliegenden Bauteile der Schalteinrichtung relativ zueinander verdrehen können, um so ein Voreinanderstehen von Zähnen der Schalteinrichtung zu vermeiden bzw. zu beseitigen.

Eine weitere vorteilhafte Ausgestaltung weist Sensoren auf, die sicherstellen, daß der Nebenabtrieb nur einschaltbar ist, wenn die Bedingungen vorliegen, daß der Antriebsmotor des Fahrzeugs läuft, das Fahrzeug sich im Stillstand befindet, das Getriebe sich in Neutralstellung befindet und keine Schaltung des Getriebes aktiv oder eingeleitet ist.

In einer vorteilhaften Ausgestaltung wird das Erreichen der Minimaldrehzahl durch eine Bremseinrichtung im Getriebe beschleunigt. Dazu kann beispielsweise eine Trägheitsbremse in Form einer Lamellenbremse an der oder einer der Vorgelegewellen angebracht sein. Auch Bremseinrichtungen an der Eingangswelle sind möglich.

Eine weitere vorteilhafte Ausgestaltung weist einen Sensor an der Schalteinrichtung auf, mit dem festgestellt wird, ob die Schalteinrichtung des Nebenabtriebs vollständig durchgeschaltet hat. Weitere vorteilhafte Ausgestaltungen weisen entweder Sensoren an der Schalteinrichtung auf, mit denen festgestellt wird, ob eine Differenzdrehzahl zwischen antreibender Getriebewelle und mit dem Nebenabtrieb verbundener Welle vorliegt, oder ob ein definierter Kupplungsverstellweg überschritten wird.

Die Erfindung wird anhand von Zeichnungen weiter erläutert.

Es zeigen:
- Fig. 1: eine schematische Darstellung eines Getriebes mit Nebenabtrieb;
- Fig. 2: eine Schalteinrichtung eines Nebenabtriebes und
- Fig. 3: den Funktionsablauf des Verfahrens.

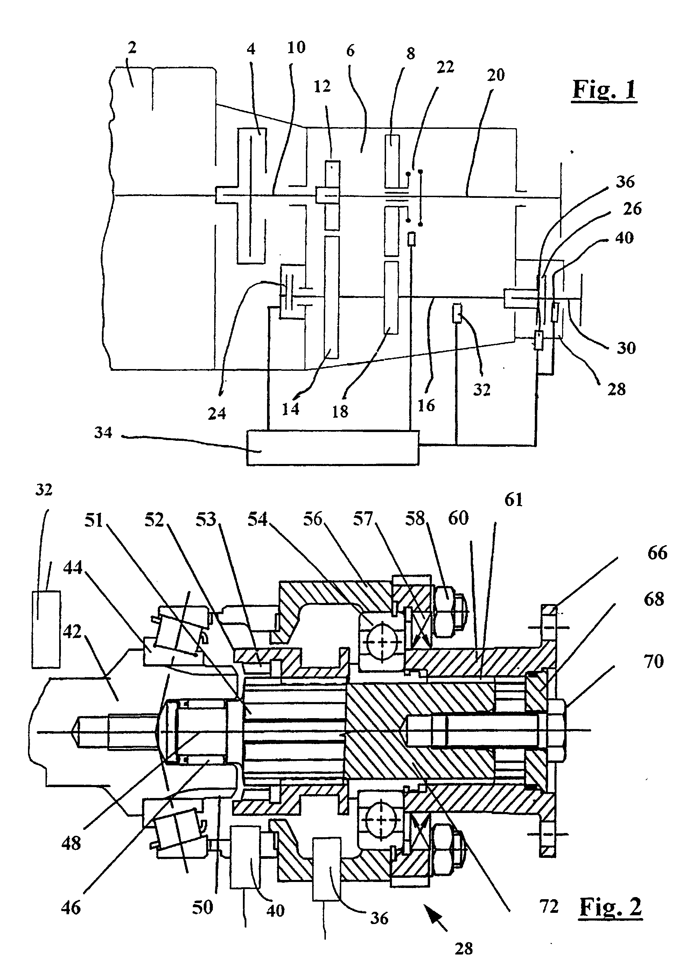

Fig. 1 zeigt in einer schematischen Darstellung einen Antriebsmotor 2, der über eine Kupplung 4 mit einem Getriebe 6 verbunden ist. Die Eingangswelle 10 des Getriebes 6 trägt ein Zahnrad 12, das mit einem Zahnrad 14 auf der Vorgelegewelle 16 kämmt. Von der Vielzahl der Übersetzungstufen des Getriebes ist hier lediglich eine Übersetzungsstufe gezeigt, die das Zahnrad 18 auf der Vorgelegewelle 16 und das Zahnrad 8 auf der Hauptwelle 20 des Getriebes aufweist. Die Hauptwelle 20 liegt koaxial zu der Eingangswelle 10. Das Zahnrad 8 kann über eine Schalteinrichtung 22 zur Drehmomentenübertragung mit der Hauptwelle 20 verbunden werden. Auf der Vorgelegewelle 16 ist weiterhin eine Getriebebremse 24 angeordnet, mit der die Vorgelegewelle 16 abgebremst werden kann. Die Vorgelegewelle 16 ist durch eine Schalteinrichtung 26 in einem Nebenabtrieb 28 mit einer Welle 30 verbindbar, durch die eine hier nicht gezeigte Vorrichtung, beispielsweise eine Pumpe, angetrieben werden kann.

An der Vorgelegewelle 16 ist ein Sensor 32 angebracht, mit dem die Drehzahl der Vorgelegewelle erfaßt werden kann und einer Steuereinrichtung 34 mitgeteilt wird. Ein weiterer Sensor 36 im Nebenabtrieb 28 stellt die Position der Schalteinrichtung 26 fest und gibt das Signal über die Position beispielsweise über einen CAN-Bus 38, an den auch der Sensor 32 angeschlossen ist, an die Steuereinrichtung 34 weiter. Ein weiterer Sensor 40 im Nebenabtrieb 28 erfaßt die Drehzahl der Welle 30 und gibt diese Information ebenfalls über den CAN-Bus an die Steuereinrichtung 34 weiter. Die Steuereinrichtung 34 ist über den CAN-Bus 38 wenigstens mit der Bremseinrichtung 24, der Schalteinrichtung 12 und der Schalteinrichtung 26 verbunden.

Die Fig. 2 zeigt eine Schalteinrichtung 26 für einen Nebenabtrieb 28.

Das Drehmoment am Nebenabtrieb 28 wird eingeleitet von der Welle 42, welche sich innerhalb des Gehäuses des Getriebes 6 befindet. Am Flansch 26 des Nebenabtriebs 28 werden nicht dargestellte anzutreibende Bauteile befestigt.

Auf der Kerbverzahnung 51 der Zwischenwelle 72 ist die Schiebemuffe 52 axial beweglich angeordnet. Die Kerbverzahnung 53 der Schiebemuffe 52 kann mit der Kerbverzahnung 50 der Welle 42 durch ein hier nicht dargestelltes Betätigungselement in Eingriff gebracht werden. Diese Einrichtung ermöglicht, den Nebenabtrieb 28 zu- oder abzuschalten. Im dargestellten abgeschalteten Zustand kann sich die Zwischenwelle 72 relativ zu Welle 42 drehen. Der Zapfen 48 ist im Zylinderrollenlager 46 gelagert. Eine zweite Lagerstelle der Zwischenwelle 72 ist das Kugellager 54, welches mittels der Schrauben 58 in dem Zwischengehäuse 56 fixiert ist. Der Wellendichtring 57 dichtet das Getriebegehäuse nach außen ab.

Das Bauteil 60 weist eine Kerbverzahnung 61 auf, über die es drehmomentenschlüssig mit der Zwischenwelle 72, welche in diesem Bereich ebenfalls eine Kerbverzahnung aufweist, verbunden ist. Axial wird das Bauteil 60 auf der Zwischenwelle 72 von dem Deckel 68 gehalten, welcher mit der Schraube 70 in der Zwischenwelle 72 befestigt ist.

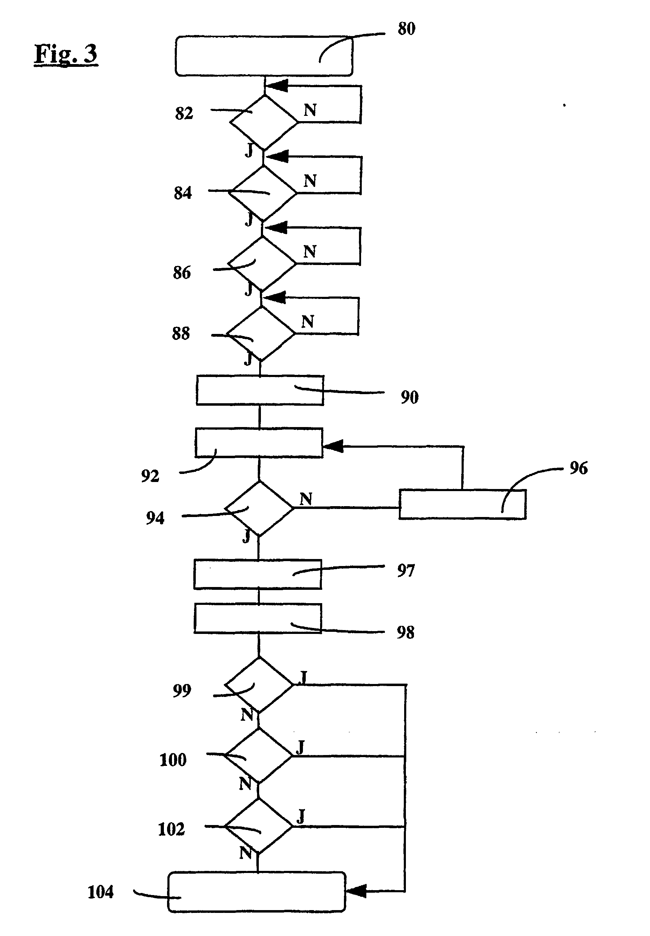

Die Fig. 3 zeigt einen Funktionsablauf des Verfahrens zur Steuerung des Nebenabtriebs 28.

In einem Startblock 80 beginnt das Verfahren zum Einschalten des Nebenabtriebs. In einer Folge von Bedingungsabfragen wird geprüft, ob die Anforderung zum Schalten eines Nebenabtriebes vorliegen. In einer ersten Bedingungsabfrage 82 wird festgestellt, ob der Fahrzeugmotor läuft. Liegt diese Bedingung vor, wird in einer folgenden Bedingungsabfrage 84 geprüft, ob das Fahrzeug steht. Liegt diese Bedingung ebenfalls vor, wird in einer folgenden Bedingungsabfrage 86 festgestellt, ob das Getriebe 6 in Neutral geschaltet ist. Liegt auch diese Bedingung vor, wird in einer Bedingungsabfrage 88 geprüft, ob eine Schaltung aktiv ist, also ob zur Zeit die Schalteinrichtungen 22 des Getriebes 6 nicht betätigt werden.

Liegt eine der geprüften Bedingungen nicht vor springt der Funktionsablauf zurück zu einem Punkt jeweils vor der nicht erfüllten Bedingung.

Liegen alle Bedingungen vor, wird eine durch den Funktionsblock 90 symbolisierte Nebenabtriebsanforderung durch den Fahrer registriert und akzeptiert und führt zu einer Öffnung der Kupplung 2, dargestellt durch Funktionsblock 92. In einer Bedingungsabfrage 94 wird festgestellt, ob die Drehzahl der Eingangswelle 10 des Getriebes 6 kleiner als ein vorgegebener Schwellwert liegt.
Wird diese Bedingung nicht erfüllt, so wird in einem Funktionsblock 96 ein Signal erzeugt zur Reduzierung der Eingangswellendrehzahl, vorzugsweise mit Hilfe einer Getriebebremse 24 auf der Eingangswelle 10 oder der Vorgelegewelle 16 oder aber auch durch Verstreichenlassen einer Zeitspanne.
Wird in der Bedingungsabfrage 94 festgestellt, das die Eingangswellendrehzahl unterhalb des vorgegebenen Schwellwertes liegt, so bewirkt Funktionsblock 97, daß der Nebenabtrieb 28 durch Betätigen der Schalteinrichtung 26 geschaltet wird. Gleichzeitig bewirkt Funktionsblock 98, daß die Kupplung 4 zu schließen beginnt.
In einer folgenden Kette von Bedingungsabfragen wird überprüft, wann der Einrückvorgang der Fahrzeugkupplung 4 abgebrochen werden kann. Dazu wird in einer Bedingungsabfrage 99 festgestellt, ob die Schalteinrichtung 26 des Nebenabtriebes 28 vollständig durchgeschaltet hat. Liegt diese Bedingung nicht vor, so wird in einer Bedingungsabfrage 100 festgestellt, ob eine Differenzdrehzahl im Nebenabtrieb zwischen der antreibenden Welle 42 und dem Ausgangsflansch 66 des Nebenabtriebs 28 vorliegt. Ist auch diese Bedingung nicht erfüllt, so wird in einer weiteren Bedingungsabfrage 102 festgestellt, ob ein definierter vorgegebener Einrückweg der Kupplung überschritten ist. Die Bedingungabfragen 99, 100, 102 sind hier aufeinanderfolgend dargestellt. Es genügt jedoch auch nur eine Bedingung zur Feststellung, ob der Nebenabtrieb 28 geschaltet ist.

Sobald eine der in den Abfragen 99, 100, 102 festgestellten Bedingungen vorliegt, wird die Einrückung der Kupplung 2 abgebrochen und die Kupplung wieder geöffnet.

Der Abschluß des Verfahrens wird symbolisch dargestellt durch des Funktionsblock 104, der anzeigt, daß der Nebenabtrieb 28 geschaltet ist.

### Bezugszeichen

- 2: Antriebsmotor
- 4: Kupplung
- 6: Getriebe
- 8: Zahnrad
- 10: Eingangswelle
- 12: Zahnrad
- 14: Zahnrad
- 16: Vorgelegewelle
- 18: Zahnrad
- 20: Hauptwelle
- 22: Schalteinrichtung
- 24: Getriebebremse
- 26: Schalteinrichtung
- 28: Nebenabtrieb
- 30: Welle
- 32: Sensor
- 34: Steuereinrichtung
- 36: Sensor
- 38: CAN-Bus
- 40: Sensor
- 42: Welle
- 46: Zylinderrollenlager
- 48: Zapfen
- 50: Kerbverzahnung
- 51: Kerbverzahnung
- 52: Schiebemuffe
- 53: Kerbverzahnung
- 54: Kugellager
- 56: Zwischengehäuse
- 57: Wellendichtring
- 58: Schraube
- 60: Bauteil mit der Sollbruchstelle
- 61: Kerbverzahnung
- 62: Nut
- 64: Kerbnut mit der Funktion Sollbruchstelle
- 66: Flansch
- 68: Deckel mit der Funktion Verliersicherung
- 70: Schraube
- 71: Absatz
- 72: Zwischenwelle
- 80: Startblock
- 82 - 88: Bedingungsabfrage
- 90: Funktionsblock
- 92: Funktionsblock
- 94: Bedingungsabfrage
- 96 - 98: Funktionsblock
- 99 -102: Bedingungsabfrage
- 104: Funktionsblock

## Patentansprüche

1. Verfahren zur Einschaltung von Nebenabtrieben (28) bei automatisierten oder teilautomatisierten Getrieben (6) von Nutzfahrzeugen, bei dem vom Fahrer ein Signal abgegeben wird, das dem Wunsch nach Einschaltung des Nebenabtriebes (28) entspricht und dieses Signal in einer Steuereinrichtung (34) umgeformt wird, **dadurch gekennzeichnet, dass** das Signal in ein Signal zur Öffnung einer automatisierten Kupplung (4) zwischen einem Antriebsmotor (2) und dem Getriebe (6) des Nutzfahrzeuges umgeformt wird, nach Erreichen einer vorgegebenen Minimaldrehzahl der Eingangswelle (10) des Getriebes (6) eine Schalteinrichtung (26) zur Verbindung des Nebenabtriebes (28) mit einer diesen antreibenden Getriebewelle (16, 42) angesteuert wird, um eine Schließung dieser Schalteinrichtung (26, 52) zu erzielen und die Kupplung (4) wieder geschlossen wird, um ein Voreinanderstehen von Zähnen (50, 53) der Schalteinrichtung (26, 52) zu beseitigen.

2. Verfahren zur Einschaltung von Nebenabtrieben (28) bei automatisierten oder teilautomatisierten Getrieben (6) von Nutzfahrzeugen nach Anspruch 1, **dadurch gekennzeichnet, daß** das Erreichen der Minimaldrehzahl durch eine Bremseinrichtung (24) im Getriebe (6) beschleunigt wird.

3. Verfahren zur Einschaltung von Nebenabtrieben (28) bei automatisierten oder teilautomatisierten Getrieben (6) von Nutzfahrzeugen nach Anspruch 1 oder 2, **dadurch gekennzeichnet, daß** durch Sensoren (36) festgestellt wird, ob die Schalteinrichtung (26, 52) des Nebenabtriebs (28) vollständig durchgeschaltet hat.

4. Verfahren zur Einschaltung von Nebenabtrieben (28) bei automatisierten oder teilautomatisierten Getrieben (6) von Nutzfahrzeugen nach Anspruch 1 oder 2, **dadurch gekennzeichnet, daß** durch Sensoren (32, 40) festgestellt wird, ob eine Differenzdrehzahl zwischen antreibender Getriebewelle (16, 42) und angetriebener Welle (30, 72) im Nebenabtrieb (28) vorliegt.

5. Verfahren zur Einschaltung von Nebenabtrieben (28) bei automatisierten oder teilautomatisierten Getrieben (6) von Nutzfahrzeugen nach Anspruch 1 oder 2, **dadurch gekennzeichnet, daß** festgestellt wird, ob an der Kupplung (4) ein definierter Kupplungsverstellweg überschritten wird.

6. Verfahren zur Einschaltung von Nebenabtrieben (28) bei automatisierten Getrieben (6) von Nutzfahrzeugen nach einem der vorherigen Ansprüche, **dadurch gekennzeichnet, daß** der Nebenabtrieb (28) nur einschaltbar ist, wenn die Bedingungen vorliegen:
- der Antriebsmotor (2) des Fahrzeugs läuft,
- das Fahrzeug befindet sich im Stillstand,
- das Getriebe (6) befindet sich in Neutralstellung und
- keine Schaltung des Getriebes (6) ist aktiv oder eingeleitet.

7. Verfahren zur Einschaltung von Nebenabtrieben (28) bei automatisierten oder teilautomatisierten Getrieben (6) von Nutzfahrzeugen nach einem der vorherigen Ansprüche, **dadurch gekennzeichnet, daß** das Verfahren bei einem Getriebe (6) mit zwei Vorgelegewellen (16) verwendet wird, wobei der Nebenabtrieb (28) von einer der beiden Vorgelegewellen (16) angetrieben wird.

## Claims

1. Method of connecting power take-off units (28) in automated or semi-automated transmissions (6) of commercial vehicles, whereby a signal corresponding to the request for connection of the power take-off unit (28) is supplied by the driver and said signal is converted in a control device (34), **characterized in that** the signal is converted into a signal for opening an automated clutch (4) between an engine (2) and the transmission (6) of the commercial vehicle, after attainment of a defined minimum rotational speed of the input shaft (10) of the transmission (6) a shift device (26) for connecting the power take-off unit (28) to a transmission shaft (16, 42), which drives the latter, is activated in order to achieve a closing of said shift device (26, 52) and the clutch (4) is closed again in order to eliminate a head-on position of teeth (50, 53) of the shift device (26, 52).

2. Method of connecting power take-off units (28) in automated or semi-automated transmissions (6) of commercial vehicles according to claim 1, **characterized in that** the attaining of the minimum rotational speed is accelerated by means of a braking device (24) in the transmission (6).

3. Method of connecting power take-off units (28) in automated or semi-automated transmissions (6) of commercial vehicles according to claim 1 or 2, **characterized in that** by means of sensors (36) it is established whether the shift device (26, 52) of the power take-off unit (28) has shifted through completely.

4. Method of connecting power take-off units (28) in automated or semi-automated transmissions (6) of commercial vehicles according to claim 1 or 2, **characterized in that** by means of sensors (32, 40) it is established whether there is a differential rotational speed between driving transmission shaft (16, 42) and driven shaft (30, 72) in the power take-off unit (28).

5. Method of connecting power take-off units (28) in automated or semi-automated transmissions (6) of commercial vehicles according to claim 1 or 2, **characterized in that** it is established whether at the clutch (4) a defined clutch displacement distance has been exceeded.

6. Method of connecting power take-off units (28) in automated transmissions (6) of commercial vehicles according to one of the preceding claims, **characterized in that** the power take-off unit (28) is connectable only when the following conditions are met:
- the engine (2) of the vehicle is running,
- the vehicle is at a standstill,
- the transmission (6) is in neutral position and
- no gear selection of the transmission (6) is active or initiated.

7. Method of connecting power take-off units (28) in automated or semi-automated transmissions (6) of commercial vehicles according to one of the preceding claims, **characterized in that** the method is used for a transmission (6) having two layshafts (16), wherein the power take-off unit (28) is driven by one of the two layshafts (16).

## Revendications

1. Méthode d'enclenchement de prises de mouvement (28) de boîtes de vitesses automatisées ou demi-automatisées (6) pour véhicules industriels, qui prévoit l'émission d'un signal par le conducteur correspondant au souhait d'enclenchement de la prise de mouvement (28) et qui prévoit la transformation de ce signal dans un boîtier de commande (34), **caractérisée en ce que** le signal est transformé en un signal qui permet l'ouverture de l'embrayage automatisé (4) disposé entre un moteur d'entraînement (2) et la boîte de vitesses (6) du véhicule industriel, et **en ce que**, après avoir atteint un régime minimum prédéfini sur l'arbre d'entrée (10) de la boîte de vitesses (6), sera piloté un dispositif d'enclenchement (26) permettant de coupler la prise de mouvement (28) à un arbre de la boîte de vitesses entraînant la prise de mouvement (16, 42), afin d'obtenir la fermeture de ce dispositif de commande (26, 52) et la fermeture de l'embrayage (4) pour éviter que les dents (50, 53) du dispositif d'enclenchement (26, 52) restent dans une position dent sur dent.

2. Méthode d'enclenchement de prises de mouvement (28) de boîtes de vitesses automatisées ou demi-automatisées (6) pour véhicules industriels selon la revendication **1,caractérisée en ce que** un dispositif de freinage (24) dans la boîte de vitesses (6) permet d'atteindre plus rapidement le régime minimum.

3. Méthode d'enclenchement de prises de mouvement (28) de boîtes de vitesses automatisées ou demi-automatisées (6) pour véhicules industriels selon les revendications 1 ou 2, **caractérisée en ce que** des capteurs (36) permettent de déterminer si le dispositif d'enclenchement (26, 52) de la prise de mouvement (28) effectue un enclenchement complet.

4. Méthode d'enclenchement de prises de mouvement (28) de boîtes de vitesses automatisées ou demi-automatisées (6) pour véhicules industriels selon les revendications 1 ou 2, **caractérisée en ce que** des capteurs (32, 40) permettent de déterminer s'il y a un régime différentiel entre l'arbre de boîte de vitesses (16, 42) et l'arbre entraîné (30, 72) dans la prise de mouvement (28).

5. Méthode d'enclenchement de prises de mouvement (28) de boîtes de vitesses automatisées ou demi-automatisées (6) pour véhicules industriels selon les revendications 1 ou 2, **caractérisée en ce que** sera déterminé si la course d'ajustage prédéfinie sur l'embrayage (4) est dépassée.

6. Méthode d'enclenchement de prises de mouvement (28) de boîtes de vitesses automatisées ou demi-automatisées (6) pour véhicules industriels selon les revendications 1 ou 2, **caractérisée en ce que** la prise de mouvement (28) ne peut être enclenchée que si les conditions suivantes sont remplies :
- le moteur d'entraînement (2) du véhicule est en marche
- le véhicules est à l'arrêt
- la boîte de vitesses (6) est au neutre et
- aucun changement de rapport dans la boîte de vitesses (6) n'est actif ni engagé.

7. Méthode d'enclenchement de prises de mouvement (28) de boîtes de vitesses automatisées ou demi-automatisées (6) pour véhicules industriels selon les revendications 1 ou 2, **caractérisée en ce que** la méthode est utilisée pour une boîte de vitesses (6) dotée de deux arbres de renvoi (16), sachant que la prise de mouvement (28) est entraînée par un des deux arbres de renvoi (16).
